# EUROPÄISCHE PATENTSCHRIFT

(11) **EP 4 048 515 B1**
(45) Veröffentlichungstag und Bekanntmachung des Hinweises auf die Patenterteilung: **01.04.2026**
(21) Anmeldenummer: 20771459.3
(22) Anmeldetag: 28.08.2020
(51) Int. Cl.: B32B 5/02, B32B 5/24, B32B 7/12, B32B 7/14, B32B 27/12, B32B 27/36, B32B 27/40, B32B 27/30, B32B 27/32, B32B 3/30

(54) **DIMENSIONSSTABILER BODENBELAG UND VERFAHREN ZU SEINER HERSTELLUNG**
DIMENSIONALLY STABLE FLOOR COVERING AND METHOD FOR ITS PRODUCTION
REVÊTEMENT DE SOL DIMENSIONNELLEMENT STABLE ET PROCÉDÉ POUR SA FABRICATION

(30) Priorität: 25.10.2019 DE 102019128881
(43) Veröffentlichungstag der Anmeldung: 31.08.2022
(73) Patentinhaber: Windmöller GmbH, 32832 Augustdorf (DE)
(72) Erfinder: WINDMÖLLER, Ulrich, 33758 Schloß Holte-Stukenbrock (DE); KRUSE, Georg, 33615 Bielefeld (DE); ROSE, Stefan, 59581 Warstein (DE)
(74) Vertreter: Patentanwälte Bauer Vorberg Kayser
(86) Internationale Anmeldenummer: PCT/EP2020/074139
(87) Internationale Veröffentlichungsnummer: WO 2021/078428

(56) Entgegenhaltungen:
- WO-A1-2015/051852
- WO-A1-2015/165886
- WO-A2-2016/134243

## Beschreibung

Die Erfindung betrifft einen Bodenbelag mit einem Kunststoffkern, die eine Oberseite und eine Unterseite aufweist, wobei an der Oberseite eine Funktionsschicht und eine Verstärkungsmatte angeordnet ist, die Fasern und dazwischen liegende Zwischenräume aufweist. Des Weiteren betrifft die Erfindung ein Verfahren zum Herstellen eines solchen Bodenbelags.

Aus der EP 3 168 388 A1 ist ein Bodenbelag in Form einer Unterlegematte bekannt, bei der an der Oberseite des Kunststoffkerns ein Selbstklebefilm angeordnet ist, der eine Trägerfolie aus Kunststoff, eine auf der Trägerfolie aufgebrachte Klebstoffschicht und ein Gittergelege aus Fasern umfasst, das in die Klebstoffschicht eingebettet ist. Der Selbstklebeschicht dient dazu, die Unterlegematte mit beispielsweise Fußbodenpaneelen, die auf der Unterlegematte verlegt werden, zu verkleben. Durch das in der Klebstoffschicht eingebettete Gittergelege wird die Klebstoffschicht und somit die Unterlegematte stabilisiert.

Aus der DE 10 2017 100 735 A1 ist ein Verfahren zur Herstellung eines mehrschichtigen Bodenbelags bekannt, in dem auf einen Dekorbogen ein Glasvlies gelegt wird. Auf den Dekorbogen und das Glasvlies wird dann flüssiges Polyurethan aufgetragen, das durch das Glasvlies bis zum Dekorbogen durchdringt. Es entsteht ein fester Verbund zwischen Dekorbogen, Glasvlies und dem durch das Auftragen des Polyurethans entstehenden Polyurethan-Kern. Das Ergebnis ist ein Bodenbelag, der auch bei größeren Temperaturschwankungen eine gute Dimensionsstabilität aufweist. Dadurch lassen sich unerwünschte Fugen vermeiden, die bei Temperaturschwankungen zwischen verlegten Elementen oder Bahnen dieses Bodenbelags entstehen können.

Die WO 2015/051852 A1 offenbart einen Bodenbelag gemäß dem Oberbegriff von Anspruch 1.

WO 2015/165886 A1 offenbart einen Vinylbodenbelag.

Gleichwohl besteht ein Bedarf, weitere Bodenbeläge bereitzustellen, die eine gute Dimensionsstabilität bei möglichst einfachem Aufbau aufweisen und sich kostengünstig herstellen lassen. Der Erfindung liegt daher die Aufgabe zu Grunde, ein Bodenbelag bereitzustellen, den man bei schwankenden Umweltbedingungen problemlos einsetzen kann, einfach aufgebaut ist und sich einfach herstellen lässt.

Die der Erfindung zu Grunde liegende Aufgabe wird mit der Merkmalskombination gemäß Anspruch 1 gelöst. Ausführungsbeispiele der Erfindung können den Unteransprüchen zu Anspruch 1 entnommen werden. Erfindungsgemäß ist vorgesehen, dass die Verstärkungsmatte und die Funktionsschicht als vorproduzierte Einheit vorliegt, bei der die Verstärkungsmatte an der Funktionsschicht befestigt ist, wobei der Kunststoffkern mit der vorproduzierten Einheit derart verbunden ist, dass der Kunststoffkern mit den Fasern der Verstärkungsmatte und durch die Zwischenräume der Verstärkungsmatte hindurch zusätzlich mit der Funktionsschicht verbunden ist. Dadurch ergibt sich ein besonders stabiler Verbund zwischen der Funktionsschicht, der Verstärkungsmatte und dem Kunststoffkern, wodurch der Bodenbelag besonders dimensionsstabil ist. Die Verbindung zwischen dem Kunststoffkern und der Funktionsschicht erfolgt somit auf zwei voneinander unabhängigen Wegen. Zum einen besteht ein mittelbarer Weg, da der Kunststoffkern an der Verstärkungsmatte befestigt ist, die wiederum an der Funktionsschicht im befestigt ist. Zum anderen besteht eine unmittelbare Verbindung zwischen dem Kunststoffkern und der Funktionsschicht durch die Zwischenräume der Verstärkungsmatte hindurch.

Die vorproduzierte Einheit kann als aufrollbare Endlosware produziert werden. Nach deren Herstellung kann die vorproduzierte Einheit zunächst gelagert und/oder zu einer anderen Fertigungsstätte transportiert werden, in der dann - zeitlich entkoppelt - die Verbindung mit dem Kunststoffkern erfolgt. Es ist auch möglich, dass die Herstellung der vorproduzierten Einheit und deren Verbindung mit dem Kunststoffkern in einem kontinuierlichen Verfahren mit nacheinander geschalteten Verfahrensschritten erfolgt. Dabei wird zunächst die Verstärkungsmatte an der Funktionsschicht befestigt und nach erfolgter Befestigung erfolgt dann direkt auf der gleichen Strecke die Verbindung mit dem Kunststoffkern.

In einem Ausführungsbeispiel umfasst die Funktionsschicht eine Kunststofffolie. Die Kunststofffolie kann aus einem Polyestermaterial wie Polyethylenterephthalat (PET) sein. Polyethylen oder Polypropylen sind weitere Beispiele für das Material, aus dem die Kunststofffolie sein kann. Auf die Kunststofffolie kann ein Dekormuster aufgebracht sein.

Die Funktionsschicht und insbesondere die Kunststofffolie kann eine Stärke von 8 bis 220 µm, vorzugsweise 20 bis 50 µm aufweisen. In einem konkreten Ausführungsbeispiel wird eine PET-Folie eingesetzt, die eine Stärke von 35 bis 40 µm aufweist.

Die Verstärkungsmatte kann eine Glasfasermatte sein. In diesem Fall handelt es sich bei den Fasern der Verstärkungsmatte um Glasfasern. Die Verstärkungsmatte kann alternativ oder zusätzlich Fasern aus Polyester, Polyamid oder Nylon aufweisen. Denkbar ist auch der Einsatz von Naturfasern. Die Fasern können eine praktisch unbegrenzte Länge wie Endlosfasern aufweisen. Sie können auch als Faserstücke mit nur geringer Länge (beispielsweise kleiner als 3 cm) ausgebildet sein.

Die Verstärkungsmatte kann ein Vlies, ein Gewebe, ein Gestricke oder ein Gelege umfassen. Unter einem Gewebe wird ein textiles Flächengebilde aus sich kreuzenden Kett- und Schußfäden verstanden, die miteinander verwebt sind. Bei einem Gelege liegen ein oder mehrere Fadensysteme verschiedener Orientierungsrichtungen übereinander, wobei die Kreuzungspunkte vorzugsweise fixiert sind. Vliese sind nicht gewebte Flächengebilde, deren Herstellung mit statistisch ungeordneten Fasern erfolgt. Ein Gestrick stellt ein textiles Flächengebilde dar, das aus einem oder mehreren Fadensystemen durch Maschenbildung erzeugt wird.

Zur Fixierung der Fasern weist erfindungsgemäß die Verstärkungsmatte ein Bindemittel auf, wobei das Bindemittel zur Befestigung der Verstärkungsmatte an die Funktionsschicht verwendet wird. Die Fasern können mit dem Bindemittel, das vorzugsweise ein polymeres Bindemittel ist, getränkt oder umhüllt sein, wobei insbesondere bei einem Gelege die Kreuzungspunkte mit diesem Bindemittel fixiert werden. Bei dem polymeren Bindemittel kann es sich um ein duroplastisches oder thermoplastisches Material handeln.

Vorzugsweise ist der Kunststoffkern aus Polyurethan. Durch den Kunststoffkern aus Polyurethan lässt sich ein Bodenbelag bereitstellen, der günstige Eigenschaften bezüglich Trittschalldämmung, Gehkomfort, Elastizität und Flexibilität aufweist. Polyurethan lässt sich zudem auf Basis von nachwachsenden Rohstoffen wie etwa Rizinusöl frei von jeglichen schädlichen Zusatzstoffen wie etwa Weichmacher, Formaldehyd, Schwermetallen oder dergleichen herstellen. Für den Kunststoffkern können auch andere Materialien wie PVC, Polyethylen oder Polypropylen eingesetzt werden.

Der Kunststoffkern kann mit Füllstoffen, vorzugsweise mit mineralischen Füllstoffen wie Sand oder Kreide, gefüllt sein. Dadurch lässt sich die Dichte des Kunststoffkerns und die mechanischen und akustischen Eigenschaften des Kunststoffkerns einstellen. Die Dichte des Kunststoffkerns kann somit Werte annehmen, die deutlich über der Dichte des verwendeten Kunststoffs liegen. In einem Ausführungsbeispiel beträgt die Dichte des Kunststoffkerns mehr als 1,5 oder gar 1,8 g/cm³. Die Dichte des Kunststoffkerns kann auch Werte kleiner als 1,5 g/cm³ annehmen, beispielsweise von 0,9 bis 1,5 g/cm³. In einem Ausführungsbeispiel handelt es sich hier um einen Kunststoffkern mit geschäumten Kunststoff und mit Füllstoffen.

Die Dicke des Kunststoffkerns kann 0,5 bis 10 mm, vorzugsweise 0,9 bis 4 mm betragen. Die Gesamtdicke des Bodenbelags kann 1 bis 12 mm, vorzugsweise 1,5 bis 5 mm betragen.

Auf einer dem Kunststoffkern abgewandten oder oberen Seite der Funktionsschicht kann wenigstens eine weitere Schicht vorgesehen sein. Bei dieser weiteren Schicht kann es sich beispielsweise um eine Klebstoffschicht handeln, die durch eine abziehbare Schutzfolie abgedeckt sein kann. So lässt sich der erfindungsgemäße Bodenbelag als selbstklebende Unterlegematte verwenden, auf die dann ein weiterer Bodenbelag verlegt werden kann.

Alternativ kann es sich bei dieser weiteren Schicht auch um eine transparente Verschleißschicht handeln, die die Funktionsschicht von oben vor äußeren Einwirkungen schützt. Beispielsweise kann in diesem Ausführungsbeispiel die Funktionsschicht ein Dekorpapier mit einem Dekormuster sein, das durch die transparente Verschleißschicht von oben sichtbar ist.

An der Unterseite des Kunststoffkerns kann eine rückseitige Funktionsschicht angeordnet sein. Diese rückseitige Funktionsschicht kann die Funktion einer Gegenzugschicht aufweisen, durch die ein Verformen des Bodenbelags aus seiner Hauptebene heraus (Schüsseln) vermieden wird. Die rückseitige Funktionsschicht kann alternativ oder zusätzlich die Funktion einer Dämpfungsschicht aufweisen. Auch ist denkbar, dass die rückseitige Funktionsschicht ein Selbstklebefilm ist, um den erfindungsgemäßen Bodenbelag auf einen darunterliegenden Unterboden oder Estrich zu kleben. Die rückseitige Funktionsschicht kann somit ihrerseits auch mehrschichtig aufgebaut sein. Im Ausführungsbeispiel des Selbstklebefilms kann die Funktionsschicht eine Trägerfolie, eine auf die Trägerfolie aufgebracht Klebstoffschicht und eine abziehbare Schutzfolie umfassen.

Der erfindungsgemäße Bodenlag kann als aufrollbare und/oder faltbare Bahnware ausgeführt sein. Auch kann der erfindungsgemäße Bodenbelag in Form eines Fußbodenpaneels ausgebildet sein, das vorzugsweise an wenigstens zwei Kanten Verbindungsprofile zum Verbinden mit anliegenden Fußbodenpaneelen gleicher Bauform aufweist. Die Verbindungsprofile können Nut und Feder aufweisen. Sie können auch Verriegelungssysteme aufweisen, so dass verbundene Verbindungsprofile in horizontaler und vertikaler Richtung miteinander verriegelt sind. Vorzugsweise sind die Verbindungsprofile vollständig in den Kunststoffkern eingeformt, beispielsweise durch Fräsen. An den zwei Kanten können auch ein stufenförmiger Überstand bzw. komplementär dazu eine stufenfömige Auflage vorgesehen sein, so dass sich zwei benachbarte Fußbodenpaneele bei Ausbildung einer ebenen Fußbodenoberfläche stufenweise überlappen.

Eine weitere Aufgabe der Erfindung, die Bereitstellung eines Verfahrens zur Herstellung eines Bodenbelags mit guter Dimensionsstabilität, wird mit Anspruch 8 gelöst. Ausführungsbeispiele dazu können den Unteransprüchen zu Anspruch 8 entnommen werden.

Das erfindungsgemäße Verfahren umfasst die Bereitstellung der vorproduzierten Einheit, wobei die Verstärkungsmatte an die Funktionsschicht befestigt wird. Diesem Verfahrensschritt folgt das Verbinden der vorproduzierten Einheit mit dem Kunststoffkern, wobei die vorproduzierte Einheit so zur Oberseite des Kunststoffkerns ausgerichtet wird, dass die Verstärkungsmatte zwischen der Oberseite des Kunststoffkerns und der Funktionsschicht angeordnet ist. Der Kunststoffkern wird dann mit der vorproduzierten Einheit verbunden, wobei der Kunststoffkern sowohl mit der Verstärkungsmatte als auch unmittelbar mit der Funktionsschicht verbunden wird. Die unmittelbare Verbindung des Kunststoffkerns mit der Funktionsschicht wird ermöglicht durch die Zwischenräume der Verstärkungsmatte, wobei die für die Verbindung von Kunststoffkern und Funktionsschicht verwendeten Verbindungsmittel durch die Zwischenräume der Verstärkungsmatte hindurch greifen.

Zur Fixierung der Fasern der Verstärkungsmatte wird erfindungsgemäß das bereits oben beschriebene Bindemittel eingesetzt werden, das auch dazu genutzt wird, die Verstärkungsmatte an der Funktionsschicht zu befestigen. Die Verstärkungsmatte kann mithilfe von Druck und/oder Wärmeeintrag mit der Funktionsschicht verbunden werden (beispielsweise durch Kalandrieren). In einem Ausführungsbeispiel, bei dem die Verstärkungsmatte ein Gelege umfasst, dessen Fasern und Kreuzungspunkte mit einem thermoplastischen Bindemittel fixiert sind, können Verstärkungsmatte und Funktionsschicht durch das Kalandrieren miteinander verbunden werden. Die Temperatur beim Kalandrieren sollte dann so eingestellt sein, dass das thermoplastische Bindemittel erweicht. Es kann dann als Klebemittel zwischen den Fasern der Verstärkungsmatte und der Funktionsschicht wirken. Danach wird das thermoplastische Bindemittel wieder hart, so dass die derart vorproduzierte Einheit nun mit dem Kunststoffkern verbunden werden kann.

Die Verstärkungsmatte kann zum Herstellen der vorproduzierten Einheit an die Funktionsschicht gelegt werden, wenn sich das Bindemittel in einem flüssigen oder pastösen Zustand befindet. Beispielsweise können die Fasern des Geleges mit einem noch nicht ausgehärteten duroplastischen Bindemittel wie Polyurethan benetzt werden. Das derart benetzte Gelege wird dann auf die Funktionsschicht gelegt. Das noch flüssige Bindemittel fixiert bei seinem Aushärten einerseits die Fasern des Geleges untereinander und sorgt aber auch für eine feste Verbindung der Fasern an der Funktionsschicht. Nach erfolgter Aushärtung des Bindemittels erfolgt dann nachgeschaltet die Verbindung mit dem Kunststoffkern. Die Herstellung des Geleges mit dem Fixieren des Bindemittels wird somit mit dem Schritt des Befestigens des Geleges an der Funktionsschicht zusammengelegt. Das Verbinden der Verstärkungsmatte mit der Funktionsschicht und das Verbinden von dem Kunststoffkern mit dem Verbund bestehend aus Funktionsschicht und Verstärkungsmatte sind erfindungsgemäß voneinander getrennt.

Zur Herstellung des Kunststoffkerns kann ein Kunststoffmaterial verwendet werden, das auf die vorgefertigte Einheit von Funktionsschicht und Verstärkungsmatte in flüssiger Form aufgetragen wird. Das flüssige Kunststoffmaterial tritt dabei durch die Zwischenräume der Verstärkungsmatte und geht somit eine Verbindung mit der Funktionsschicht und den Fasern der Verstärkungsmatte ein. Das Kunststoffmaterial in flüssiger Form ist in einem bevorzugten Ausführungsbeispiel flüssiges Polyurethan bzw. eine flüssige Mischung aus den Komponenten (Polyole und Isocyanate), aus denen sich Polyurethan bildet.

Als besonders vorteilhaft hat sich herausgestellt, dass durch das erfindungsgemäße Verfahren und der dadurch erreichbaren guten Haftung zwischen der Funktionsschicht, der Verstärkungsmatte und dem Material des Kunststoffkerns auf den Einsatz von zusätzlichem Klebstoff, der üblicherweise unmittelbar vor dem Auftragen des flüssigen Polyurethan auf die Funktionsschicht und der darauf angeordneten Verstärkungsmatte ausgetragen wird, verzichtet werden kann. Dies reduziert nicht nur die Materialkosten, sondern vermeidet auch die mit dem Klebstoffauftrag verbundenen Probleme wie die Blasenbildung in dem Polyurethan-Material. Die Erfindung führt somit zu einem Bodenbelag mit besonders homogenen Kunststoffkern ohne unerwünschte Unregelmäßigkeiten.

Anhand eines in der Zeichnung dargestellten Ausführungsbeispiels soll die Erfindung näher erläutert werden. Es zeigen:
- Figur 1: schematisch einen mehrschichtigen Bodenbelag gemäß der Erfindung; und
- Figur 2: eine vorproduzierte Einheit als Teil des Bodenbelags von Figur 1.

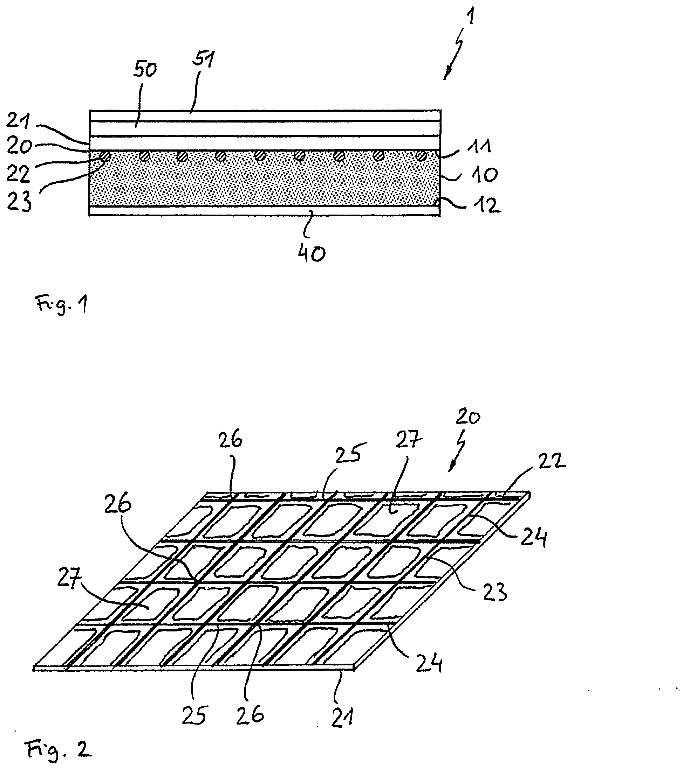

Figur 1 zeigt schematisch einen Bodenbelag, der in seiner Gesamtheit mit 1 bezeichnet wird. Der Bodenbelag umfasst einen Kunststoffkern 10 aus Polyurethan, wobei der Kunststoffkern mit einem mineralischen Füllstoff gefüllt sein kann. An einer Oberseite 11 des Kunststoffkerns 10 ist eine vorgefertigte oder vorproduzierte Einheit 20 angeordnet, die eine Funktionsschicht 21 hier in Form einer PET-Folie und eine Verstärkungsmatte 22 umfasst. In der Darstellung der Figur 1 sind von der Verstärkungsmatte 22 nur einzelne Fasern 23 zu erkennen. Auf die vorproduzierte Einheit 20 wird später noch näher eingegangen.

An einer Unterseite 12 des Kunststoffkerns 10 ist eine rückseitige Funktionsschicht 40 angeordnet. Bei dieser Funktionsschicht 40 handelt es sich in diesem Ausführungsbeispiel um ein Vlies, das geeignet ist, etwaige Unebenheiten eines Unterbodens, auf den der Bodenbelag 1 gelegt oder verlegt werden kann, auszugleichen.

An einer dem Kunststoffkern 10 abgewandten Seite der PET-Folie 21 sind weitere Schichten vorgesehen. Es soll sich hier um eine Klebstoffschicht 50 und eine darüber angeordnete abziehbare Schutzfolie 51 handeln. Der in Figur 1 dargestellte Bodenbelag 1 kann als Unterlegematte verwendet werden, die nach dem Abziehen der Schutzfolie 51 mit Fußbodenpaneelen verklebt werden kann, die auf der Unterlegematte verlegt werden.

Figur 2 zeigt die vorgefertigte Einheit 20 schematisch in perspektivische Ansicht. In der Darstellung der Figur 2 befinden sich nun die Fasern 23 oberhalb der PET-Folie 21. Die Fasern 23 umfassen Längsfasern 24 und dazu senkrecht ausgerichtete Querfasern 25. Bei der Anordnung der Längsfasern 24 und Querfasern 25 soll es sich um ein Gelege handeln, bei denen die einzelnen Fasern einfach übereinandergelegt werden. Die durch die Ausrichtung der Fasern 24, 25 entstehenden Kreuzungspunkte sind mit 26 bezeichnet.

Zur Fixierung der Fasern 24, 25 untereinander bzw. zur Fixierung der Kreuzungspunkte 26 wird ein Bindemittel eingesetzt, mit denen die einzelnen Fasern 24, 25 benetzt werden. Wird ein Gelege - dies gilt sinngemäß auch für andere Ausführungsformen der Verstärkungsmatte 22 - mit den mit dem Bindemittel benetzen Fasern 24, 25 auf die PET-Folie 21 gelegt, wobei das Bindemittel noch nicht getrocknet oder ausgehärtet ist, so benetzt oder bedeckt das Bindemittel auch die Bereiche der PET-Folie 21, mit denen die benetzen Fasern 24, 25 in Kontakt kommen. Das Bindemittel wird somit nicht nur zur Fixierung der Fasern 24, 25 untereinander verwendet, sondern es führt auch zu einer Befestigung der einzelnen Fasern 24, 25 an der PET-Folie 21. Das Bindemittel fungiert somit zusätzlich als Klebemittel, mit dem die Verstärkungsmatte 22 an die PET-Folie 21 befestigt wird.

Die Anhaftung der Verstärkungsmatte 22 oder genauer gesagt die Anhaftung der einzelnen Fasern 24, 25 der Verstärkungsmatte 22 an die PET-Folie 21 kann durch Druck verstärkt werden. Beispielsweise können die PET-Folie 21 und die Verstärkungsmatte 22 einem Kalandrierspalt zugeführt werden, in dem die Fasern 24, 25 gegen die PET-Folie 21 gedrückt werden.

Figur 2 zeigt des Weiteren verbleibende Zwischenräume 27 der Verstärkungsmatte 22. Sie entsprechen in dem Ausführungsbeispiel der Figur 2 den Flächen auf der PET-Folie, die nach dem Trocknen oder Aushärten des Bindemittels, möglicherweise unterstützt oder begleitet durch das Aufbringen von Druck und erhöhter Temperatur, nicht von dem Bindemittel benetzt/bedeckt sind. Lediglich in unmittelbarer Nähe zu den einzelnen Fasern 24, 25 oder in unmittelbarer Nähe der Kreuzungspunkte 26 ist die PET-Folie 21 mit dem Bindemittel benetzt oder bedeckt. Zu beachten ist, dass die Zwischenräume 27 nur schematisch dargestellt sind. Sind die Fasern 24, 25 mit dem Bindemittel nur leicht benetzt und werden so auf die PET-Folie 21 gelegt, erstrecken sich die Zwischenräume 27 praktisch über die gesamte Maschenweite des Geleges. In diesem Fall wird die PET-Folie 21 näherungsweise nur an der Kontaktlinie der aufliegenden Faser mit dem Bindemittel bedeckt.

Zur Herstellung des Bodenbelags 1 kann auf die vorgefertigte Einheit 20 mit trockenem oder ausgehärteten Bindemittel in der in Figur 2 gezeigten Ausrichtung von oben flüssiges Polyurethan aufgetragen werden, wobei dieses Polyurethan aufgrund der Zwischenräume 27 direkten Kontakt nicht nur zu den Fasern 24, 25, sondern auch direkten Kontakt zu der PET-Folie 21 hat. Somit ist ein besonders fester Verbund möglich zwischen dem Kunststoffkern 10 und der vorgefertigten Einheit 20, welche die PET-Folie 21 und die Verstärkungsmatte 22 umfasst. Dies führt zu einem besonders dimensionsstabilen Bodenbelag in Längs- und Querrichtung.

Ein Verhältnis des Anteils der Fläche der Funktionsschicht (PET-Folie 21), die mit dem Bindemittel benetzt oder bedeckt ist, bezogen auf die Gesamtfläche der Funktionsschicht nimmt erfindungsgemäß Werte zwischen 2 bis 80% an. Das Verhältnis hängt einerseits ab von der Faserdichte (Anzahl der Fasern pro Flächeneinheit) und deren Durchmesser sowie von der Menge und Viskosität des eingesetzten Bindemittels. Je kleiner dieses Verhältnis ist, desto größer ist die flächenmäßige Anhaftung des Kernmaterials direkt an der Funktionsschicht 21. Je größer das Verhältnis ist, desto mehr erfolgt eine mittelbare Anhaftung des Kernmaterials an der Funktionsschicht 21 über die Verstärkungsmatte 22, wobei durch die dann größere Klebefläche zwischen Bindemittel und Funktionsschicht 21 eine intensive Haftung zwischen Funktionsschicht 21 und Verstärkungsmatte 22 gegeben ist.

Bei einem Gelege, bei dem der Abstand benachbarter Fasern groß sei kann, nimmt das Verhältnis vergleichsweise kleine Werte an, beispielsweise 2 bis 6 %. Bei einem Vlies können pro Flächeneinheit viele Fasern auf der PET-Folie 21 aufliegen, so dass das Verhältnis eher große Werte annimmt. Hier kann das Verhältnis Werte größer als 40 % annehmen..

### Bezugszeichenliste

- 1: Bodenbelag/Unterlegematte

- 10: Kunststoffkern
- 11: Oberseite
- 12: Unterseite

- 20: vorproduzierte/vorgefertigte Einheit
- 21: Funktionsschicht/PET-Folie
- 22: Verstärkungsmatte
- 23: Faser
- 24: Längsfaser
- 25: Querfaser
- 26: Kreuzungspunkt
- 27: Zwischenraum

- 40: rückseitige Funktionsschicht

- 50: Klebeschicht
- 51: Schutzfolie

## Patentansprüche

1. Bodenbelag (1) mit einem Kunststoffkern (10), die eine Oberseite (11) und eine Unterseite (12) aufweist, wobei an der Oberseite (11) eine Funktionsschicht (21) in Form einer Kunststofffolie und eine Verstärkungsmatte (22) angeordnet ist, die Fasern (23) und dazwischen liegende Zwischenräume (27) aufweist, wobei die Verstärkungsmatte (22) zwischen der Oberseite (11) des Kunststoffkerns (10) und der Funktionsschicht (21) liegt, wobei die Verstärkungsmatte (22) und die Funktionsschicht (21) eine vorproduzierte Einheit (20) darstellt, bei der die Verstärkungsmatte (22) an der Funktionsschicht (21) befestigt ist, wobei der Kunststoffkern (10) mit der vorproduzierten Einheit (20) derart verbunden ist, dass der Kunststoffkern (10) mit den Fasern (23) der Verstärkungsmatte (22) und durch die Zwischenräume (27) der Verstärkungsmatte (22) hindurch mit der Funktionsschicht (21) verbunden ist, wobei die Verstärkungsmatte (22) ein Bindemittel zur Fixierung der Fasern aufweist, wobei durch das Bindemittel die Verstärkungsmatte (22) an der Funktionsschicht (21) befestigt ist, und wobei ein Verhältnis des Anteils der Fläche der Funktionsschicht, die mit dem Bindemittel benetzt oder bedeckt ist, bezogen auf die Gesamtfläche der Funktionsschicht Werte zwischen 2 und 80% annimmt.

2. Bodenbelag (1) nach Anspruch 1, **dadurch gekennzeichnet, dass** die Kunststofffolie aus einem Polyestermaterial ist.

3. Bodenbelag (1) nach Anspruch 1 oder 2, **dadurch gekennzeichnet, dass** die Verstärkungsmatte (22) eine Glasfasermatte ist.

4. Bodenbelag (1) nach einem der Ansprüche 1 bis 3, **dadurch gekennzeichnet, dass** die Verstärkungsmatte (22) ein Vlies, ein Gewebe, ein Gestricke oder ein Gelege umfasst.

5. Bodenbelag (1) nach einem der Ansprüche 1 bis 4, **dadurch gekennzeichnet, dass** der Kunststoffkern aus Polyurethan ist.

6. Bodenbelag (1) nach einem der Ansprüche 1 bis 5, **dadurch gekennzeichnet, dass** auf einer dem Kunststoffkern (10) abgewandten Seite der Funktionsschicht (21) wenigstens eine weitere Schicht (50) vorgesehen ist.

7. Bodenbelag (1) nach einem der Ansprüche 1 bis 6, **dadurch gekennzeichnet, dass** an der Unterseite (12) des Kunststoffkerns (10) eine rückseitige Funktionsschicht (40) angeordnet ist.

8. Verfahren zum Herstellen eines Bodenbelags (1), wobei der Bodenbelag (1) einen Kunststoffkern (10) mit einer Oberseite (11) und einer Unterseite (12) aufweist und wobei an der Oberseite (11) eine Funktionsschicht (21) in Form einer Kunststofffolie und eine Verstärkungsmatte (22) angeordnet sind, die Fasern (23) und dazwischen angeordnete Zwischenräume (27) aufweist, wobei das Verfahren folgende Schritte umfasst:
- Bereitstellung einer vorproduzierten Einheit (20) umfassend die Funktionsschicht (21) und die Verstärkungsmatte (22), wobei die Verstärkungsmatte an die Funktionsschicht (21) befestigt wird, wobei zur Fixierung der Fasern (23) der Verstärkungsmatte (22) ein Bindemittel eingesetzt wird, das auch dazu genutzt wird, die Verstärkungsmatte (22) an der Funktionsschicht (21) zu befestigen, und wobei ein Verhältnis des Anteils der Fläche der Funktionsschicht, die mit dem Bindemittel benetzt oder bedeckt ist, bezogen auf die Gesamtfläche der Funktionsschicht Werte zwischen 2 und 80% annimmt;
- Verbinden der vorproduzierten Einheit (20) mit dem Kunststoffkern (10), wobei die Verstärkungsmatte (22) zwischen der Oberseite (11) des Kunststoffkerns (10) und der Funktionsschicht (21) angeordnet wird, wobei der Kunststoffkern (10) mit der Verstärkungsmatte (22) und durch die Zwischenräume (27) der Verstärkungsmatte (21) hindurch mit der Funktionsschicht (21) verbunden wird.

9. Verfahren nach Anspruch 8, **dadurch gekennzeichnet, dass** die Verstärkungsmatte (22) mit Hilfe von Druck und/oder Wärme mit der Funktionsschicht (21) verbunden wird.

10. Verfahren nach einem der Ansprüche 8 oder 9, **dadurch gekennzeichnet, dass** die Verstärkungsmatte (22) an die Funktionsschicht (21) gelegt wird, wenn sich das Bindemittel in einem flüssigen Zustand befindet.

11. Verfahren nach einem der Ansprüche 8 bis 10,
**dadurch gekennzeichnet,**
**dass** die Verstärkungsmatte (22) ein Netz aus Querfasern (25) und Längsfasern (24) umfasst, die an ihren Kreuzungspunkten (27) fixiert werden.

12. Verfahren nach einem der Ansprüche 8 bis 11, **dadurch gekennzeichnet, dass** zur Herstellung des Kunststoffkerns (10) ein Kunststoffmaterial verwendet wird, das auf die vorgefertigte Einheit (20) von Funktionsschicht (21) und Verstärkungsmatte (22) in flüssiger Form aufgetragen wird, wobei das flüssige Kunststoffmaterial durch die Zwischenräume (27) der Verstärkungsmatte (22) tritt und somit eine Verbindung mit der Funktionsschicht (21) und den Fasern (23, 24, 25) der Verstärkungsschicht (22) eingeht.

## Claims

1. Floor covering (1) comprising a plastics core (10) that has an upper side (11) and a lower side (12), wherein a functional layer (21) in the form of a plastics film, and a reinforcement mat (22) that has fibers (23) and spaces (27) arranged between them are arranged on the upper side (11), wherein the reinforcement mat (22) lies between the upper side (11) of the plastics core (10) and the functional layer (21), wherein the reinforcement mat (22) and the functional layer (21) constitute a pre-produced unit (20) in which the reinforcement mat (22) is attached to the functional layer (21), wherein the plastics core (10) is connected to the pre-produced unit (20) such that the plastics core (10) is connected to the fibers (23) of the reinforcement mat (22) and through the spaces (27) of the reinforcement mat (22) to the functional layer (21), wherein the reinforcement mat (22) comprises a binder for fixing the fibers, wherein the reinforcement mat (22) is attached to the functional layer (21) by the binder, and wherein the ratio of the proportion of the area of the functional layer that is wetted or covered with the binder, in relation to the total area of the functional layer, assumes values between 2 and 80%.

2. Floor covering (1) according to claim 1, **characterized in that** the plastics film is made of a polyester material.

3. Floor covering (1) according to claim 1 or 2, **characterized in that** the reinforcement mat (22) is a fiberglass mat.

4. Floor covering (1) according to any of claims 1 to 3, **characterized in that** the reinforcement mat (22) comprises a nonwoven fabric, a woven fabric, a knitted fabric or a scrim.

5. Floor covering (1) according to any of claims 1 to 4, **characterized in that** the plastics core is made of polyurethane.

6. Floor covering (1) according to any of claims 1 to 5, **characterized in that** at least one further layer (50) is provided on a side of the functional layer (21) facing away from the plastics core (10).

7. Floor covering (1) according to any of claims 1 to 6, **characterized in that** a rear functional layer (40) is arranged on the lower side (12) of the plastics core (10).

8. Method for manufacturing a floor covering (1), wherein the floor covering (1) has a plastics core (10) that has an upper side (11) and a lower side (12) and wherein a functional layer (21) in the form of a plastics film, and a reinforcement mat (22) that has fibers (23) and spaces (27) arranged between them are arranged on the upper side (11), wherein the method comprises the following steps:
- providing a pre-produced unit (20) comprising the functional layer (21) and the reinforcement mat (22), wherein the reinforcement mat is attached to the functional layer (21), wherein a binder is used to fix the fibers (23) of the reinforcement mat (22), which binder is also used to attach the reinforcement mat (22) to the functional layer (21), and wherein the ratio of the proportion of the area of the functional layer that is wetted or covered with the binder, in relation to the total area of the functional layer, assumes values between 2 and 80%;
- connecting the pre-produced unit (20) to the plastics core (10), wherein the reinforcement mat (22) is arranged between the upper side (11) of the plastics core (10) and the functional layer (21), wherein the plastics core (10) is connected to the reinforcement mat (22) and through the spaces (27) of the reinforcement mat (21) to the functional layer (21).

9. Method according to claim 8, **characterized in that** the reinforcement mat (22) is connected to the functional layer (21) using pressure and/or heat.

10. Method according to either of claims 8 or 9, **characterized in that** the reinforcement mat (22) is placed against the functional layer (21) when the binder is in a liquid state.

11. Method according to any of claims 8 to 10, **characterized in that** the reinforcement mat (22) comprises a network of transverse fibers (25) and longitudinal fibers (24) which are fixed at their intersection points (27).

12. Method according to any of claims 8 to 11, **characterized in that** for the production of the plastics core (10), a plastics material is used which is applied in liquid form to the prefabricated unit (20) consisting of the functional layer (21) and reinforcement mat (22), the liquid plastics material passing through the spaces (27) of the reinforcement mat (22) and thus forming a connection with the functional layer (21) and the fibers (23, 24, 25) of the reinforcement layer (22).

## Revendications

1. Revêtement de sol (1) comprenant une âme en matière plastique (10) qui présente une face supérieure (11) et une face inférieure (12), dans lequel une couche fonctionnelle (21) sous forme de film plastique et une natte de renforcement (22) qui présente des fibres (23) et des espaces (27) situés entre celles-ci sont disposées sur la face supérieure (11), dans lequel ladite natte de renforcement (22) est située entre la face supérieure (11) de l'âme en matière plastique (10) et la couche fonctionnelle (21), dans lequel la natte de renforcement (22) et la couche fonctionnelle (21) constituent une unité préfabriquée (20) dans laquelle la natte de renforcement (22) est fixée à la couche fonctionnelle (21), dans lequel l'âme en matière plastique (10) est reliée à l'unité préfabriquée (20) de telle manière que l'âme en matière plastique (10) est reliée aux fibres (23) de la natte de renforcement (22) et, à travers les espaces (27) de la natte de renforcement (21), à la couche fonctionnelle (21), dans lequel la natte de renforcement (22) comprend un liant pour la fixation des fibres, dans lequel la natte de renforcement (22) est fixée à la couche fonctionnelle (21) par l'intermédiaire dudit liant, et dans lequel un rapport de la proportion de la surface de la couche fonctionnelle, qui est imprégnée ou recouverte du liant, à la surface totale de la couche fonctionnelle présente des valeurs comprises entre 2 et 80 %.

2. Revêtement de sol (1) selon la revendication 1, **caractérisé en ce que** le film plastique est en une matière de polyester.

3. Revêtement de sol (1) selon la revendication 1 ou 2, **caractérisé en ce que** la natte de renforcement (22) est une natte en fibres de verre.

4. Revêtement de sol (1) selon l'une quelconque des revendications 1 à 3, **caractérisé en ce que** la natte de renforcement (22) comprend un non-tissé, un tissu, un tissu tricoté ou une nappe.

5. Revêtement de sol (1) selon l'une quelconque des revendications 1 à 4, **caractérisé en ce que** l'âme en matière plastique est en polyuréthane.

6. Revêtement de sol (1) selon l'une quelconque des revendications 1 à 5, **caractérisé en ce qu'**au moins une autre couche (50) est prévue sur une face de la couche fonctionnelle (21), qui montre dans la direction opposée à l'âme en matière plastique (10).

7. Revêtement de sol (1) selon l'une quelconque des revendications 1 à 6, **caractérisé en ce qu'**une couche fonctionnelle face arrière (40) est disposée sur la face inférieure (12) de l'âme en matière plastique (10).

8. Procédé de fabrication d'un revêtement de sol (1), dans lequel le revêtement de sol (1) comprend une âme en matière plastique (10) avec une face supérieure (11) et une face inférieure (12), et dans lequel une couche fonctionnelle (21) sous forme de film plastique et une natte de renforcement (22) qui présente des fibres (23) et des espaces (27) disposés entre celles-ci sont disposées sur la face supérieure (11), le procédé comprenant les étapes suivantes consistant à:
- fournir une unité préfabriquée (20) comprenant la couche fonctionnelle (21) et la natte de renforcement (22), dans lequel la natte de renforcement est fixée à la couche fonctionnelle (21), dans lequel un liant est utilisé pour fixer les fibres (23) de la natte de renforcement (22), ce liant utilisé également pour fixer la natte de renforcement (22) à la couche fonctionnelle (21), et dans lequel un rapport de la proportion de la surface de la couche fonctionnelle, qui est imprégnée ou recouverte du liant, à la surface totale de la couche fonctionnelle présente des valeurs comprises entre 2 et 80 %,
- relier ladite unité préfabriquée (20) à l'âme en matière plastique (10), dans lequel la natte de renforcement (22) est disposée entre la face supérieure (11) de l'âme en matière plastique (10) et la couche fonctionnelle (21), dans lequel l'âme en matière plastique (10) est reliée à la natte de renforcement (22) et, à travers les espaces (27) de la natte de renforcement (21), à la couche fonctionnelle (21).

9. Procédé selon la revendication 8, **caractérisé en ce que** la natte de renforcement (22) est reliée à la couche fonctionnelle (21) à l'aide de pression et/ou de chaleur.

10. Procédé selon l'une quelconque des revendications 8 ou 9, **caractérisé en ce que** la natte de renforcement (22) est placée contre la couche fonctionnelle (21) lorsque le liant est à l'état liquide.

11. Procédé selon l'une quelconque des revendications 8 à 10,
**caractérisé en ce que** la natte de renforcement (22) comprend un réseau de fibres transversales (25) et de fibres longitudinales (24) qui sont fixées à leurs points d'intersection (27).

12. Procédé selon l'une quelconque des revendications 8 à 11, **caractérisé en ce qu'**une matière plastique est utilisée pour fabriquer l'âme en matière plastique (10), laquelle est appliquée sous forme liquide sur l'unité préfabriquée (20) faite de la couche fonctionnelle (21) et de la natte de renforcement (22), dans lequel la matière plastique liquide traverse les espaces (27) de la natte de renforcement (22) et forme ainsi une liaison avec la couche fonctionnelle (21) et avec les fibres (23, 24, 25) de la couche de renforcement (22).
